# EUROPÄISCHE PATENTSCHRIFT

(11) **EP 2 401 628 B1**
(45) Veröffentlichungstag und Bekanntmachung des Hinweises auf die Patenterteilung: **25.10.2017**
(21) Anmeldenummer: 10810957.0
(22) Anmeldetag: 22.12.2010
(51) Int. Cl.: G01S 7/481, G01S 17/06

(54) **VERFAHREN ZUM OPTISCHEN MESSEN EINES ABSTANDS, EINER POSITION UND/ODER EINES PROFILS**
METHOD FOR OPTICALLY MEASURING A DISTANCE, A POSITION, AND/OR A PROFILE
PROCÉDÉ DE MESURE OPTIQUE D'UNE DISTANCE, D'UNE POSITION ET/OU D'UN PROFIL

(30) Priorität: 22.12.2009 DE 102009060442
(43) Veröffentlichungstag der Anmeldung: 04.01.2012
(73) Patentinhaber: Micro-Epsilon Optronic GmbH, 01465 Dresden-Langebrück (DE)
(72) Erfinder: STAUTMEISTER, Torsten, 01465 Dresden-Langebrück (DE); OTTO, Tobias, 01109 Dresden (DE)
(74) Vertreter: Patent- und Rechtsanwälte Ullrich & Naumann
(86) Internationale Anmeldenummer: PCT/DE2010/001507
(87) Internationale Veröffentlichungsnummer: WO 2011/076187

(56) Entgegenhaltungen:
- WO-A1-2008/068791
- US-A1- 2002 008 203
- US-A1- 2002 149 694
- US-A1- 2008 063 426
- Fraunhofer-Institutfür Lasertechnik ILT: "Performance and Results Annual Report 2007", , Bd. Annual Report 2007 (Auszug) 2007, XP002629371, Gefunden im Internet: URL:www.ilt.fraunhofer.de/eng/ilt/pdf/eng/ JB2007-eng.pdf [gefunden am 2011-03-21]
- AKASAKI I ET AL: "Shortest wavelength semiconductor laser diode", ELECTRONICS LETTERS, Bd. 32, Nr. 12, 6. Juni 1996 (1996-06-06), Seiten 1105-1106, XP006005254, IEE STEVENAGE, GB ISSN: 0013-5194, DOI: 10.1049/EL:19960743

## Beschreibung

Die Erfindung betrifft ein Verfahren zum optischen Messen eines Abstands, einer Position und/oder eines Profils eines Messobjekts, wobei das Messobjekt aufgrund seiner Temperatur elektromagnetische Strahlung emittiert.

Aus US2002/0008203 ist ein optisches System zum Betrachten von heißen Objekten bekannt. Optische Sensoren zum Messen eines Abstands, einer Position und/oder eines Profils eines Messobjekts sind aus der Praxis seit langem bekannt. Ein Lichtstrahl, meist ein Laserstrahl, wird als Beleuchtungslichtstrahl ausgesendet und an einem Messobjekt reflektiert. Das zu dem Sensor zurückreflektierte Teil der Beleuchtungslichtstrahl wird von einem Detektor gemessen. Die Messungen erlauben Rückschlüsse auf die Position und/oder den Abstand des Messobjekts relativ zum Sensor. Bei einer punktförmigen Beleuchtung des Messobjekts kann durch Bewegung des Sensors, Lenken des Lichtstrahls und/oder Bewegen des Messobjekts ein Profil des Messobjekts ermittelt werden. Bei nicht-punktförmigen (beispielsweise linien- oder gitterförmigen) Beleuchtungsmustern kann ein Profil auch ohne Bewegung bestimmt werden. Eine reine Profilmessung kann bei einigen optischen Sensortypen ohne Abstandsmessung erfolgen.

Sehr weite Verbreitung bei optischen Abstandssensoren finden Triangulationssensoren, bei denen die Lichtquelle, der auf dem Messobjekt beleuchtete Messpunkt und der Detektor ein Dreieck aufspannen. Aus der Kenntnis der Geometrie des Triangulationssensors und aus der Position des Lichtflecks auf dem Detektor kann auf die Entfernung des Messobjekts vom Sensor geschlossen werden.

Wesentlich für optische Messungen ist, dass eine ausreichende Intensität des durch den Sensor ausgesandten Lichts zu dem Detektor zurückreflektiert wird und dass das zurückreflektierte Licht auf dem Detektor einen ausreichend hellen Messfleck, -streifen oder -muster erzeugt.

Besonders problematisch sind optischen Messverfahren dann, wenn gegen selbstleuchtende Körper gemessen werden soll. Einer der wichtigsten Fälle von selbstleuchtenden Messobjekten sind heiße Gegenstände. Bei Temperaturen über 700°C emittieren Körper nicht unerhebliche elektromagnetische Strahlung im infraroten Bereich. Mit zunehmender Temperatur nimmt der Anteil der elektromagnetischen Strahlung im sichtbaren optischen Bereich zu. Wenn gegen derartige selbstleuchtende Körper gemessen werden soll, muss bei den bekannten optischen Sensoranordnungen die Beleuchtungslichtstärke erhöht oder auf andere Sensortechniken, wie kapazitive oder induktive Sensoren, ausgewichen werden. Nicht immer möchte oder kann man jedoch auf die Vorzüge optischer Sensoren verzichten. So verfügen optische Sensoren beispielsweise im Vergleich zu anderen berührungslos arbeitenden Sensoren relativ große Messabstände bei gleichzeitig guten Auflösungen. Ferner kann gegen sehr viele verschiedene leitende oder nicht-leitende Materialien zuverlässig gemessen werden. Die Erhöhung der Beleuchtungslichtstärke hat jedoch zum einen zur Folge, dass der Energieverbrauch des Sensors ansteigt, zum anderen ist bei Verwendung von Lasern als Lichtquellen das Einhalten Leistungsgrenzwerte gesetzlich vorgeschrieben, so dass die Leistung nicht beliebig erhöht werden kann.

Der vorliegenden Erfindung liegt daher die Aufgabe zugrunde, ein Verfahren zum optischen Messen eines Abstands, einer Position und/oder eines Profils der eingangs genannten Art derart auszugestalten und weiterzubilden, dass Messungen auch gegen Messobjekte, die elektromagnetische Strahlung emittieren, durchgeführt werden können.

Erfindungsgemäß wird die voranstehende Aufgabe durch die Merkmale des Anspruchs 1 gelöst.

In erfindungsgemäßer Weise ist zunächst erkannt worden, dass auf die Vorzüge des optischen Messens bei einer Messung gegen Messobjekte, die aufgrund ihrer Temperatur elektromagnetische Strahlung emittieren, nicht verzichtet werden muss. Vielmehr kann durch geeignete Wahl der Wellenlänge des durch die Lichtquelle des Sensors emittierten Lichtstrahls auch in derartigen Messsituationen eine optische Messung ermöglicht werden. Jeder heiße Körper emittiert aufgrund seiner Temperatur elektromagnetische Strahlung, deren Spektrum durch das Plancksche Strahlungsspektrum beschrieben werden kann. Das Plancksche Strahlungsspektrum beschreibt die spezifische Abstrahlung über der Wellenlänge der abgestrahlten elektromagnetischen Strahlung. Das Plancksche Strahlungsspektrum ist eine von der Temperatur des Körpers abhängige Kurvenschar, wobei sich das Maximum, das jedes Strahlungsspektrum aufweist, mit zunehmender Temperatur in Richtung kürzerer Wellenlängen verschiebt.

Erfindungsgemäß wird das Maximum des Planckschen Strahlungsspektrums bei der Wahl der Wellenlänge des Lichtstrahls, der durch die Lichtquelle des Sensors ausgesendet wird, genutzt. In den meisten Messsituationen ist bekannt, mit welchen Temperaturen der Messobjekte zu rechnen ist. Soll beispielsweise der Sensor in einer Gießerei zur Messung an Gussteilen verwendet werden, ist im Allgemeinen bekannt, wie heiß das Messobjekt jeweils ist. Daher lässt sich sehr häufig im Vorfeld bestimmen, bei welcher Wellenlänge das Maximum des Planckschen Strahlungsspektrums zu erwarten ist. Mit dem bekannten Maximum kann auch die erfindungsgemäße Dimensionierung der Wellenlänge derart durchgeführt werden, dass die Wellenlänge des durch die Lichtquelle erzeugten Lichts unterhalb des Maximums des Planckschen Strahlungsspektrums des Messobjekts liegt. Auf diese Weise ist ein geeignetes Mittel gegeben, mit dem der Einsatz des optischen Sensors bei Messungen gegen heiße Messobjekte sichergestellt ist.

Vorzugsweise wird der Abstand zwischen Wellenlänge und dem Maximum des Planckschen Strahlungsspektrums möglichst groß gewählt. Es bieten sich - je nach Temperatur des Messobjekts - mehrere 10 nm bis hin zu einigen 100 nm an. Bei sehr heißen Messobjekten mit Temperaturen jenseits von 1.000 K fällt das Plancksche Strahlungsspektrum nach dem Maximum zu kleineren Wellenlängen hin sehr stark ab. In diesem Fall kann der Abstand zwischen dem Maximum des Planckschen Strahlungsspektrums und der Wellenlänge mit mehreren 10 nm, beispielsweise 50nm, gewählt werden. Bei niedrigeren Temperaturen, beispielsweise 700 K, ist das Plancksche Strahlungsspektrum relativ flach und die Kurve fällt nach dem Maximum zu kleineren Wellenlängen hin relativ gemächlich ab. In solchen Fällen empfiehlt sich die Wahl eines Abstands zwischen Wellenlänge des ausgesendeten Lichts und dem Maximum des Planckschen Strahlungsspektrums bis hin zu einigen 100 nm. Zur Dimensionierung des Abstands zwischen Wellenlänge des durch den Sensor ausgesendeten Lichts und des Maximums des Planckschen Strahlungsspektrums wird die Detektierbarkeit des zurückreflektierten Teils des Beleuchtungslichtstrahls berücksichtigt. In einem ersten Schritt wird die maximale Leistung des Lichts der Lichtquelle definiert. Diese maximale Strahlungsleistung ist im Allgemeinen bedingt durch die zur Verfügung stehende Energie, die mögliche Abwärme, die Strahlungsgrenzwerte in der jeweiligen Einsatzsituation, die Kosten der jeweiligen Lichtquelle und/oder weiteren Randbedingungen. Der Abstand zwischen der Wellenlänge des ausgesendeten Lichts und des Maximums des Planckschen Strahlungsspektrums wird derart gewählt, dass der in dem Detektor des Sensors zurückreflektierte Anteil des Beleuchtungslichtstrahls noch ausreichend gut detektierbar ist. Im Allgemeinen ist hierzu notwendig, dass der an dem Messobjekt reflektierte Lichtstrahl auf dem Detektor einen Lichtfleck mit ausreichender Intensität zeichnet. Dabei sollte der Lichtfleck nicht zu groß sein und die Intensitätsverteilung auf dem Detektor derart ausgestaltet sein, dass eine Entscheidung für die Position des Lichtflecks auf dem Detektor mit ausreichender Sicherheit getroffen werden kann. Entsprechende Dimensionierungsverfahren sind dem Fachmann aus der Praxis hinlänglich bekannt. Statt der Erhöhung der Beleuchtungsleistung kann nunmehr jedoch die Wellenlänge des Beleuchtungslichtstrahls beeinflusst werden, um eine Detektierbarkeit zu verbessern.

Vorzugsweise wird die Wellenlänge des durch die Lichtquelle des Sensors ausgesendeten Lichtstrahls kleiner als 450 nm gewählt. Besonders bevorzugter Weise wird diese kleiner als oder gleich 432 nm gewählt. Es wird darauf hingewiesen, dass mit dieser Wellenlänge lediglich der wesentliche Anteil der durch die Lichtquelle erzeugten Strahlungsintensität gemeint ist. Die Lichtquelle kann - je nach Wahl der Lichtquelle - auch andere spektrale Anteile mit längeren Wellenlängen emittieren. Allerdings sollte das Maximum der Strahlungsintensität bei kleineren Wellenlängen liegen, vorzugsweise bei Wellenlängen kleiner als 450 nm, besonders bevorzugter Weise kleiner als oder gleich 432 nm. Beispiele für besonders bevorzugte Wellenlängen sind 405 nm und 370 nm.

Zum Schutz des empfindlichen Detektors kann dem Detektor ein wellenlängenselektives Element vorgeschaltet sein. Dadurch kann die elektromagnetische Strahlung des Messobjekts bereits recht gut ausgeblendet werden. Das wellenlängenselektive Element lässt dabei im Wesentlichen nur die spektralen Anteile durch, in denen das Licht der Lichtquelle liegt. Dabei ist das wellenlängenselektive Element vorzugsweise schmalbandig ausgeführt, wodurch das im Allgemeinen ebenso sehr schmalbandig ausgeprägte Licht der Lichtquelle des Sensors besonders effektiv bei dem Detektor gemessen werden kann. Andere, nicht von der Lichtquelle herrührende spektrale Anteile in dem zurückreflektierten Lichtstrahl führen daher nicht zu einer allgemeinen Anhebung der durch den Detektor gemessenen Strahlungsintensität. Dadurch kann die Gefahr der Sättigung des Detektors reduziert werden. Das wellenlängenselektive Element kann durch ein optisches Filter, ein dispersives Element oder andere, aus der Praxis bekannte Elemente gebildet sein.

Der Detektor kann dabei zeilen- oder matrixförmig aufgebaut sein. Der Detektor lässt sich in CMOS-Technik oder CCD(Charge Coupled Device)-Technik ausbilden. Der Detektor kann auch als positionsabhängige Fotodiode ausgestaltet sein.

In einer besonders bevorzugten Ausführung der Erfindung arbeitet der Sensor nach dem Triangulationsprinzip. Der Abstand des Messobjekts von dem Sensor wird dabei über die Geometrie des Sensors bestimmt. Es wird ausgenutzt, dass die Lichtquelle, der auf dem Messobjekt beleuchtete Messfleck und der auf dem Detektor beleuchtete Punkt ein Dreieck bilden. Über dieses Dreieck wird der Abstand zwischen Sensor und dem beleuchteten Punkt auf der Oberfläche des Messobjekts berechnet.

In einer anderen bevorzugten Ausgestaltung der Erfindung arbeitet der Sensor nach dem Lichtlaufprinzip. Hierbei wird die Zeit gemessen, die ein Lichtstrahl vom Sensor zum Messobjekt und zurück zum Detektor benötigt. Aus dem Stand der Technik bekannte Verfahren zur Laufzeitmessung nutzen das Pulslaufzeitenprinzip oder das Phasenshiftverfahren. Bei letzterem wird der Beleuchtungslichtstrahl moduliert.

Durch die Laufzeit des Lichtstrahls entsteht eine Phasenverschiebung zwischen Beleuchtungslichtstrahl und dem reflektierten Lichtstrahl. Aus der Phasenverschiebung kann auf die Laufzeit und damit auf die Entfernung geschlossen werden.

Die Lichtquelle wird vorzugsweise als Laser ausgebildet. Der Laser beleuchtet das Messobjekt punktförmig, linienförmig oder kreuzlinienförmig. Auch andere Beleuchtungsmuster sind denkbar. So können mehrere parallele oder mehrere gekreuzte Linien zur Beleuchtung genutzt werden. Der Laser kann durch eine Laserdiode, einen Festkörperlaser oder einen Gaslaser gebildet sein.

Alternativ könnte die Lichtquelle auch als LED (Light Emitting Diode) ausgebildet sein. Da Dioden zunehmend mit kürzeren Wellenlängen am Markt verfügbar sind, lassen sich auch diese bei dem erfindungsgemäßen Sensor einsetzen. Die Verwendbarkeit ist von dem jeweiligen Anwendungszweck abhängig.

Zusammenfassend werden nochmals einige Merkmale der Erfindung beispielhaft dargestellt. Die Erfindung bezieht sich auf den Einsatz einer Laserdiode mit einer kurzen Wellenlänge (bspw. 405 nm oder 432 nm) im deutlichen Abstand vom Wellenlängenmaximum eines mit über 700°C strahlenden heißen Objektes.

Das Verhältnis von spezifischer Ausstrahlung eines heißen Körpers und Bestrahlungsstärke einer Lichtquelle ist maßgebend für die Möglichkeit der Abstandsmessung gegen durch Erwärmung selbstleuchtende Oberflächen mit einem Sensor, welcher nach dem Triangulationsprinzip arbeitet. Die spezifische Abstrahlung bezeichnet den abgegebenen Strahlungsfluß/Fläche [W/m²], die Bestrahlungsstärke den auftreffenden Strahlungsfluß/Fläche [W/m²].

Entsprechend dem Planckschen Strahlungsspektrum ergibt sich, dass je größer der Abstand der Wellenlänge der Lichtquelle der Messeinheit zur maximalen Wellenlänge des selbstleuchtenden Objekts ist, desto niedriger kann die Bestrahlungsstärke sein, desto größer wird die Möglichkeit, den auf die selbstleuchtende Oberfläche projizierten Lichtpunkt von der selbstleuchtenden Oberfläche zu unterscheiden und somit letztlich Abstände gegen diese selbstleuchtende Oberfläche mit gleichzeitig lichtemittierenden und spektral selektiv lichtsammelnden Sensoren zu messen. Die Lichtquelle emittiert vorzugsweise im Wellenlängenbereich < 432 nm.

Durch den Einsatz eines wellenlängenselektiven Elements (z.B. schmalbandiges optisches Filter) im Detektionskanal, bspw. eines Interferenzfilters, wird die Strahlungsselektion bewirkt, d.h. die restliche Strahlung vom breitbandig empfindlichen optoelektronischen Detektor ferngehalten.

Als Detektor kommen bei der Abstandsmessung nach dem Triangulationsverfahren (punktförmige Abstandsmessung oder Lichtschnittverfahren) üblicherweise CCD- oder CMOS-Zeilen oder -Matrizen in Frage. Es können für die punktförmige Abstandsmessung aber auch positionsempfindliche Fotodioden (PSD) zum Einsatz kommen. In anderen Fällen kann auch statt eines Detektors eine komplette Zeilen- oder Matrixkamera verwendet werden.

Als Lichtquellen können Laserdioden, Festkörper- oder Gaslaser sowie unter Umständen auch Leuchtdioden genutzt werden. Die Strahlform ist beliebig, vorzugsweise jedoch punktförmig oder linienförmig oder gekreuzte Linien.

Das Messsystem/der Sensor kann eingesetzt werden bei der Abstandsmessung, Positionsmessung, Profilmessung. Eine Anwendung an Objekten mit hoher Temperatur ist möglich.

Aufgrund der verwendeten Wellenlängen ist die Eindringtiefe des Lichtes in teiltransparente Objekte geringer und damit auch der daraus resultierende Messfehler.

Das hier beschriebene Messsystem arbeitet nach dem Triangulationsprinzip und wird zum Messen von Abständen gegen aufgrund Ihrer Temperatur selbst Strahlung emittierende Körper eingesetzt. Das Messystem ist dadurch gekennzeichnet, dass eine Lichtquelle (z.B. Laserdiode) mit einer Emmissionswellenlänge eingesetzt wird, welche entsprechend dem Planckschen Strahlungsspektrum nicht im Maximum sondern möglichst weit entfernt vom Maximum des selbststrahlenden Körpers liegt.

Selektion dieser Wellenlänge/Unterdrückung von sich unterscheidenden Wellenlängen im Empfangsstrahlengang durch optische Filter, bzw. dispersive Elemente mit entsprechenden Blenden.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Ansprüche verwiesen. Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf die Ausführungsbeispiele einschränken.

## Patentansprüche

1. Verfahren zum optischen Messen eines Abstands, einer Position und/oder eines Profils eines Messobjekts unter Verwendung eines optischen Sensors, wobei das Messobjekt aufgrund seiner Temperatur elektromagnetische Strahlung im infraroten Bereich emittiert, wobei die Temperatur des Messobjekts über 700 °C liegt, wobei für das Messobjekt das Maximum des Plankschen Strahlungsspektrums bestimmt wird, wobei das Messobjekt zur Durchführung der Messung mit einem Lichtstrahl mit kurzer Wellenlänge beleuchtet wird, wobei die Wellenlänge unterhalb des Maximums des Planckschen Strahlungsspektrums des Messobjekts gewählt wird, wobei in einem ersten Schritt die maximale Leistung des Lichts der Lichtquelle definiert wird und wobei der Abstand zwischen der Wellenlänge des ausgesendeten Lichts und des Maximums des Planckschen Strahlungsspektrums derart gewählt wird, dass der in den Detektor des Sensors zurückreflektierte Anteil des Beleuchtungslichtstrahls noch ausreichend gut detektierbar ist.

2. Verfahren nach Anspruch 1, **dadurch gekennzeichnet, dass** die Wellenlänge einen Abstand von mehreren 10 nm von dem Maximum des Planckschen Strahlungsspektrums aufweist.

3. Verfahren nach Anspruch 1 oder 2, **dadurch gekennzeichnet, dass** der spektrale Abstand zwischen der Wellenlänge des durch die Lichtquelle ausgesendeten Lichtstrahls und des Wellenlängenmaximums des Messobjekts derart groß gewählt wird, dass bei gegebener maximaler Leistung des Lichts der Lichtquelle eine ausreichende Signalstärke am Detektor des Sensors erreicht wird.

4. Verfahren nach einem der Ansprüche 1 bis 3, **dadurch gekennzeichnet, dass** der Lichtstrahl zur Beleuchtung des Messobjekts durch eine Lichtquelle erzeugt wird und dass ein durch Anteil des an dem Messobjekt reflektierten Beleuchtungslichtstrahls durch einen Detektor detektiert wird, wobei Lichtquelle und Detektor Teil des Sensors sind.

5. Verfahren nach Anspruch 4, **dadurch gekennzeichnet, dass** der durch die Lichtquelle ausgesendete Lichtstrahl ein Wellenlängenbereich kleiner als 450 nm aufweist, besonders bevorzugter Weise kleiner als oder gleich 432 nm.

6. Verfahren nach Anspruch 4 oder 5, **dadurch gekennzeichnet, dass** dem Detektor ein wellenlängenselektives Element vorgeschaltet ist, wobei das wellenlängenselektive Element im Wesentlichen nur die spektralen Anteile durchlässt, in denen das Licht der Lichtquelle liegt, wobei das wellenlängenselektive Element vorzugsweise durch ein optisches Filter bzw. ein dispersives Element gebildet ist.

7. Verfahren nach einem der Ansprüche 1 bis 6, **dadurch gekennzeichnet, dass** der Sensor als Triangulationssensor ausgebildet ist.

8. Verfahren nach einem der Ansprüche 1 bis 6, **dadurch gekennzeichnet, dass** der Sensor nach dem Lichtlaufprinzip arbeitet.

9. Verfahren nach einem der Ansprüche 1 bis 8, **dadurch gekennzeichnet, dass** die Lichtquelle durch ein Laser gebildet ist, mittels dessen das Messobjekt punktförmig, linienförmig oder kreuzlinienförmig beleuchtet wird.

## Claims

1. Method for optically measuring a distance, a position and/or a profile of a measurement object using an optical sensor, wherein the measurement object emits electromagnetic radiation in the infrared range as a result of its temperature, wherein the temperature of the measurement object is above 700°C, wherein for the measurement object the maximum of Planck's radiation spectrum is determined, wherein the measurement object in order to carry out the measurement is illuminated with a light beam having a short wavelength, wherein the wavelength is selected below the maximum of Planck's radiation spectrum of the measurement object, wherein in a first step the maximum power of the light of the light source is defined and wherein the distance between the wavelength of the transmitted light and the maximum of Planck's radiation spectrum is selected in such a manner that the portion of the illumination light beam which is reflected back into the detector of the sensor can still be detected sufficiently well.

2. Method according to claim 1, **characterised in that** the wavelength has a distance of several 10 nm from the maximum of Planck's radiation spectrum.

3. Method according to claim 1 or 2, **characterised in that** the spectral distance between the wavelength of the light beam transmitted by the light source and the wavelength maximum of the measurement object is selected to be so large that, with a given maximum power of the light of the light source, an adequate signal strength is achieved at the detector of the sensor.

4. Method according to any one of claims 1 to 3, **characterised in that** the light beam for illuminating the measurement object is produced by a light source and **in that** a portion of the illumination light beam reflected on the measurement object is detected by a detector, wherein the light source and detector are part of the sensor.

5. Method according to claim 4, **characterised in that** the light beam emitted by the light source has a wavelength range less than 450 nm, in a particularly preferred manner less than or equal to 432 nm.

6. Method according to claim 4 or 5, **characterised in that** a wavelength-selective element is arranged upstream of the detector, wherein the wavelength-selective element allows through substantially only the spectral portions in which the light of the light source is located, wherein the wavelength-selective element is preferably formed by means of an optical filter or a dispersive element.

7. Method according to any one of claims 1 to 6, **characterised in that** the sensor is constructed as a triangulation sensor.

8. Method according to any one of claims 1 to 6, **characterised in that** the sensor operates in accordance with the time of flight principle.

9. Method according to any one of claims 1 to 8, **characterised in that** the light source is formed by a laser by means of which the measurement object is illuminated in a point-like, linear or cross-line-like manner.

## Revendications

1. Procédé pour la mesure optique d'une distance, d'une position et/ou d'un profil d'un objet de mesure à l'aide d'un capteur optique, l'objet de mesure émettant, du fait de sa température, un rayonnement électromagnétique dans le domaine infrarouge, la température de l'objet de mesure étant supérieure à 700°C, le maximum du spectre de rayonnement de Planck étant déterminé pour l'objet de mesure, l'objet de mesure étant éclairé, pour la réalisation de la mesure, avec un rayon lumineux avec une longueur d'onde courte, la longueur étant choisie comme inférieure au maximum du spectre de rayonnement de Planck, moyennant quoi, dans une première étape, la puissance maximale de la lumière de la source lumineuse est définie et la distance entre la longueur d'onde de la lumière émise et le maximum du spectre de rayonnement de Planck est choisie de façon à ce que la part du rayon lumineux d'éclairage réfléchie dans le détecteur du capteur puisse encore être détectée de manière suffisante.

2. Procédé selon la revendication 1, **caractérisé en ce que** la longueur d'onde présente une distance de plusieurs fois 10 nm par rapport au maximum du spectre de rayonnement de Planck.

3. Procédé selon la revendication 1 ou 2, **caractérisé en ce que** la distance spectrale entre la longueur d'onde du rayon lumineux émis par la source lumineuse et le maximum de longueur d'onde de l'objet de mesure est choisie de façon à ce que, pour une puissance maximale donnée de la lumière de la source lumineuse, une intensité de signal suffisante soit obtenue au niveau du détecteur du capteur.

4. Procédé selon l'une des revendications 1 à 3, **caractérisé en ce que** le rayon lumineux d'éclairage de l'objet de mesure est généré par une source lumineuse et **en ce qu'**une partie du rayon lumineux d'éclairage réfléchie au niveau de l'objet de mesure est détectée par un détecteur, la source lumineuse et le détecteur faisant partie du capteur.

5. Procédé selon la revendication 4, **caractérisé en ce que** le rayon lumineux émis par la source lumineuse présente une plage de longueurs d'onde inférieure à 450 nm, de préférence inférieur ou égale 432 nm.

6. Procédé selon la revendication 4 ou 5, **caractérisé en ce qu'**un élément de sélection de longueurs d'onde est branché en amont du détecteur, l'élément de sélection de longueurs d'onde laissant passer globalement uniquement les parties du spectre dans lesquelles se trouve la lumière de la source lumineuse, l'élément de sélection de longueurs d'onde étant constitué de préférence d'un filtre optique ou d'un élément de dispersion.

7. Procédé selon l'une des revendications 1 à 6, **caractérisé en ce que** le capteur est conçu comme un capteur de triangulation.

8. Procédé selon l'une des revendications 1 à 6, **caractérisé en ce que** le capteur fonctionne selon le principe de la mesure du temps de transit de la lumière.

9. Procédé selon l'une des revendications 1 à 8, **caractérisé en ce que** la source lumineuse est constituée d'un laser au moyen duquel l'objet de mesure peut être éclairé de manière ponctuelle, linéaire ou avec des lignes croisées.
